# EUROPEAN PATENT SPECIFICATION

(11) **EP 3 262 634 B1**
(45) Date of publication and mention of the grant of the patent: **03.04.2019**
(21) Application number: 15710122.1
(22) Date of filing: 26.02.2015
(51) Int. Cl.: G10L 15/06, G10L 15/02

(54) **OBFUSCATING TRAINING DATA**
VERSCHLEIERUNG VON TRAININGSDATEN
BROUILLAGE DE DONNÉES D'APPRENTISSAGE

(43) Date of publication of application: 03.01.2018
(73) Proprietor: Longsand Limited, Cambridge, Cambridgeshire CB4 0WZ (GB)
(72) Inventor: BETLEY, Abigail, London Greater London SW1Y 4JY (GB); PYE, David, Cambridge Cambridgeshire CB4 0WZ (GB); TEFERA ASEFA, Milky, Cambridge Cambridgeshire CB4 0WZ (GB)
(74) Representative: EIP
(86) International application number: PCT/EP2015/054092
(87) International publication number: WO 2016/134782

(56) References cited:
- US-A1- 2009 292 541
- US-A1- 2012 130 709
- US-A1- 2013 006 612
- US-B1- 8 862 467

## Description

### BACKGROUND

Audio analysis systems, such as speech recognition systems, language identification systems, or other similar audio classification systems, use supervised learning algorithms on a training data set (e.g., audio files and corresponding text transcripts) to train or adapt corresponding acoustic models for the audio analysis. Accuracy of an audio analysis system may be dependent upon the training data set. For example, the greater the size of the training data set, the more representative the training data set may be of speech sounds and acoustics, and the more accurate the audio analysis system becomes. US patent publication number US 2013/006612 describes methods, systems and apparatus for training acoustic models.

The object of the present invention is achieved by the independent claims. Particular embodiments are defined in the dependent claims.

### BRIEF DESCRIPTION OF THE DRAWINGS

FIG. 1 illustrates a schematic diagram of an example training data obfuscation system, including a data obfuscator implemented in accordance with an aspect of this disclosure.
FIG. 2 a block diagram of an example data obfuscator that may be used to implement the data obfuscator of FIG. 1.
FIG. 3 illustrates an example training data set that may be analyzed and obfuscated by the example data obfuscator of FIGS. 1 or 2.
FIG. 4 illustrates a representation of an example obfuscation of training data performed by the example data obfuscator of FIGS. 1 or 2.
FIG. 5 is a flowchart representative of example machine readable instructions that may be executed to implement the data obfuscator of FIG. 2.
FIG. 6 is a flowchart representative of an example portion of the example machine readable instructions of FIG. 5 to implement the data obfuscator of FIG. 2.

Wherever possible, the same reference numbers will be used throughout the drawing(s) and accompanying written description to refer to the same or like parts

### DETAILED DESCRIPTION

Examples disclosed herein involve obfuscating training data for an audio analysis system, such as a speech recognition system, language identification system, etc. In examples disclosed herein, training data, including audio data and a corresponding text transcript, is obfuscated by randomizing annotated feature vectors generated from the training data using states of an acoustic model of the audio analysis system. An example sequence of annotated feature vectors representative of the training data may be randomized, reorganized, or edited (e.g., to remove some annotated feature vectors) such that the annotated feature vectors sent to the audio analysis system cannot be used to determine content, audio, text, or subject matter of the original training data.

Sourcing and creating data sets for audio analysis systems, such as speech recognition systems, can be costly and time consuming. Many entities (e.g., banks, service companies, medical companies, etc.) record conversations and generate corresponding transcripts between entity representatives and customers for training purposes, legal purposes, etc. Customers consent to the recording, though the conversations may include confidential or private subject matter (e.g., personal identification information, financial information, medical information, etc.).

Examples disclosed herein allow for use of such existing conversations and corresponding transcripts from such companies as training data for an audio analysis system to increase accuracy of an acoustic model of the audio analysis system while keeping content, subject matter, and information discussed in the conversations and corresponding text transcripts private or confidential. In examples disclosed herein, annotated feature vectors include an acoustic feature and a state of the acoustic feature generated from corresponding text transcript and are randomly provided to the audio analysis system such that the audio analysis system cannot determine the subject matter of the conversation. Accordingly, example disclosed herein allow for confidentiality of conversations and corresponding transcripts while enabling use of such conversations and transcripts for training data for an audio analysis system.

**An** example method includes computing a sequence of acoustic features from audio data of training data, the training data comprising the audio data and a corresponding text transcript; mapping the acoustic features to acoustic model states to generate annotated feature vectors. The example annotated feature vectors include the acoustic features and corresponding states generated from context from the text transcript. An example method further involves providing a randomized sequence of the annotated feature vectors as obfuscated training data to an audio analysis system.

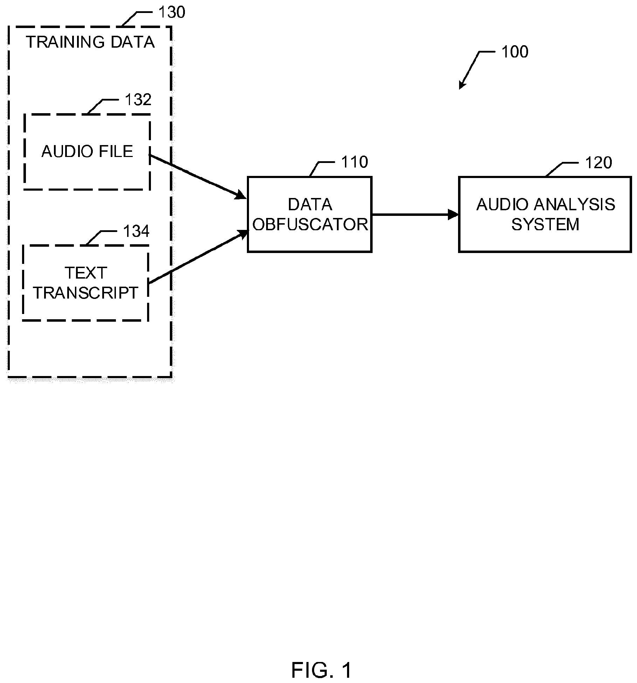

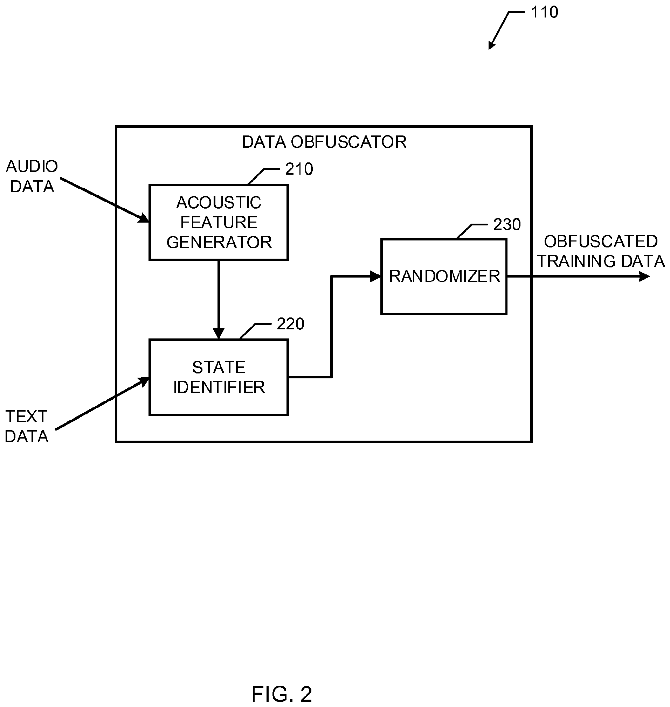

FIG. 1 is a schematic diagram of an example training data obfuscation system 100. The training data obfuscation system 100 of FIG. 1 includes a data obfuscator 110 constructed in accordance with the teachings of this disclosure and an audio analysis system 120. In examples disclosed herein, the data obfuscator 110 receives training data 130, obfuscates the training data, and provides the obfuscated training data to the audio analysis system 120. An example implementation of the data obfuscator 110 of FIG. 1 is disclosed below in connection with FIG. 2.

In the illustrated example of FIG. 1, the training data 130 includes an audio file 132 and a corresponding text transcript 134. The example audio file 132 may be any type of audio file having any type of format. The example text transcript 134 may be any type of text file comprising text of conversation or context present in the audio file 132. In examples disclosed herein, the text transcript 134 may be generated using any suitable techniques (e.g., manual transcription). In examples disclosed herein, the audio file 132 and text transcript 134 may include confidential information (e.g., personal information, identification information, financial information, medical information, etc.). For example, the training data 130 may be generated from a conversation between an entity (e.g., a bank, a service entity (e.g., a telecommunication service, a utility service, etc.), a medical entity (e.g., a hospital, a medical practice), a legal entity (e.g., a law firm), etc.) and a customer of the entity. In such an example, the customer may authorize recording of the conversation for training purposes or legal purposes. Accordingly, in examples disclosed herein, it may be unlawful to provide the audio file 132 or corresponding text transcript 134 that includes confidential information to a third party (e.g., the audio analysis system 120) without consent of the customer.

The example audio analysis system 120 may be a speech recognition system, a language identification system, audio classification or any other similar type of audio analysis system that utilizes an acoustic model to generate or determine text from speech or content of speech. The example audio analysis system 120 may utilize a learning algorithm or neural network to recognize speech sounds and translate the speech sounds into a most likely sequence of words. The example audio analysis system 120 may utilize an acoustic model to map audio features from an audio file to the speech sounds. The acoustic model may utilize a discrete number of states (e.g., 2500, 4000, etc.) to map the audio features to the speech sounds, also known as and referred to herein interchangeably as, phonemes. Accordingly, each speech sound may be assigned designated state label(s) that is/are representative of the particular state(s) and corresponding speech sound(s). In some examples, the acoustic model may utilize a variable number of states (rather than the discrete number of states). In such an example, the acoustic model may be periodically or aperiodically (e.g., after each change to the number of states) synchronized between the audio analysis system 120 and the data obfuscator 110. In some examples, each phoneme identified may be provided with a phoneme identifier. Additionally, phonemes may include a plurality of states (e.g., a triphone (three states), a quinphone (five states), etc.).

FIG. 2 is a block diagram of an example data obfuscator 110 that may be used to implement the data obfuscator 110 of FIG. 1. The example data obfuscator 110 of FIG. 2 includes an acoustic feature generator 210, a state identifier 220, and a randomizer 230. In examples disclosed herein, the acoustic feature generator 210 and the state identifier 220 generate annotated feature vectors from audio data and corresponding text transcripts to be randomized by the randomizer 230 to create obfuscated training data for an audio analysis system (e.g., the audio analysis system 120).

The example acoustic feature generator 210 computes a sequence of acoustic features from the audio file 132 of the training data 130. In examples disclosed herein, a feature is any representation derived from a segment of the audio data. For example, a feature may be the spectral coefficients for an audio segment. Accordingly, the acoustic feature generator 210 may determine features detected within the audio data and provide the features to the state identifier in a sequence corresponding to the audio data.

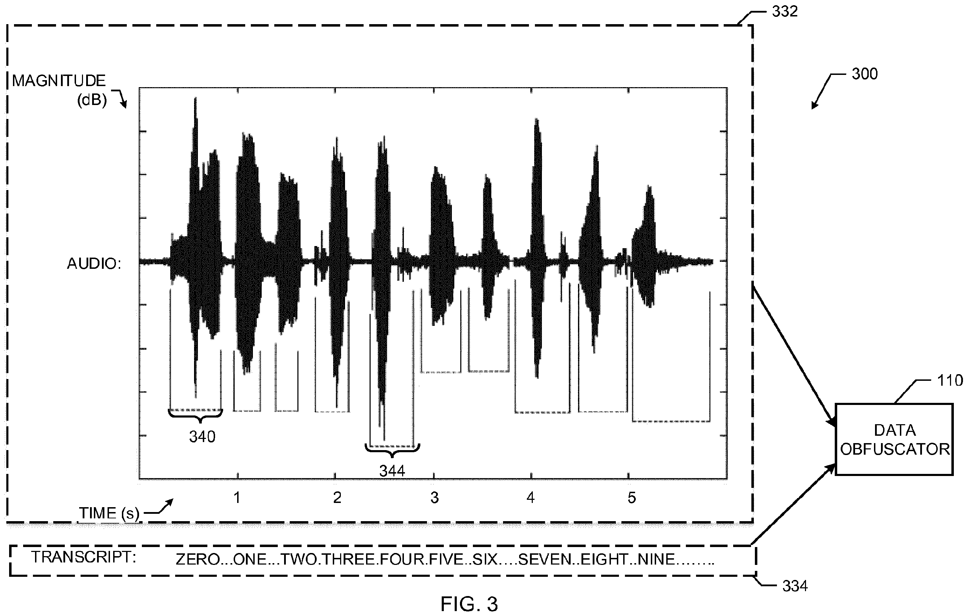

The example state identifier 220 analyzes audio features and aligns them with the text transcript 134 (e.g., based on timing of the features in the audio file 132 and timing of the context in the text transcript). In examples disclosed herein, the state identifier 220 maps features to the corresponding model state using the alignment with the text transcript. A model state may be represented by a phoneme in context (e.g., triphones or quinphones). A more specific example is further described in connection with FIG. 3.

In examples disclosed herein, to identify states of a feature, the state identifier 220 may consult a database of the data obfuscator 110 or the training data obfuscation system 100 (e.g., a cloud database in communication with the training data obfuscation system 100) to map the features to a particular state. In examples disclosed herein, the state identifier 220 may use any suitable techniques for looking up and comparing features to states of an acoustic model of the audio analysis system 120.

The example state identifier 220 generates an annotated feature vector including the acoustic feature and a state generated from the text transcript 134 corresponding to the acoustic feature (e.g., information on sounds preceding or following the sounds identified in the feature vectors by using triphones). The state is generated from aligning the features to the context of the text transcript 134. The state identifier 220 provides the annotated feature vectors in a sequence corresponding to the speech of the training data. In examples disclosed herein, the annotated feature vectors generated by the state identifier 220 may be used independently from the audio file 132 or text transcript 134 from which they were generated.

The randomizer 230 in the example of FIG. 2 randomizes a sequence or timing of sending annotated feature vectors as obfuscated training data to the audio analysis system 120. For example, the randomizer 230 may reorganize (e.g., using a random number generator or any other suitable randomization technique) the annotated features vectors into a random sequence that would provide unrecognizable audio or text but still provide training data that can be utilized by the audio analysis system 120. In some examples, the randomizer 230 may randomly select a timing of when the annotated feature vectors are to be sent to the audio analysis system 120. For example, randomizer 230 may randomly select annotated feature vectors generated from the training data 130 and send the annotated feature vectors at various times to the audio analysis system 120. By randomly sequencing and sending the annotated feature vectors to the audio analysis system 120, the randomizer 230 creates obfuscated training data for the audio analysis system 120 that may be used in an acoustic model of the audio analysis system 120 (e.g., to convert speech to text, to classify the audio, to identify a language, etc.), but cannot be used to determine context or subject matter of the original training data 130.

While an example manner of implementing the data obfuscator 110 of FIG. 1 is illustrated in FIG. 2, at least one of the elements, processes or devices illustrated in FIG. 2 may be combined, divided, re-arranged, omitted, eliminated or implemented in any other way. Further, the acoustic feature generator 210, the state identifier 220, the randomizer 230, or, more generally, the example data obfuscator 110 of FIG. 2 may be implemented by hardware or any combination of hardware and executable instructions (e.g., software or firmware). Thus, for example, any of the acoustic feature generator 210, the state identifier 220, the randomizer 230, or, more generally, the example data obfuscator 110 could be implemented by at least one of an analog or digital circuit, a logic circuit, a programmable processor, an application specific integrated circuit (ASIC), a programmable logic device (PLD) or a field programmable logic device (FPLD). When reading any of the apparatus or system claims of this patent to cover a purely software or firmware implementation, at least one of the acoustic feature generator 210, the state identifier 220, or the randomizer 230 is/are hereby expressly defined to include a tangible computer readable storage device or storage disk such as a memory, a digital versatile disk (DVD), a compact disk (CD), a Blu-ray disk, etc. storing the executable instructions. Further still, the example data obfuscator 110 of FIG. 2 may include at least one element, process, or device in addition to, or instead of, those illustrated in FIG. 2, or may include more than one of any or all of the illustrated elements, processes and devices.

FIG. 3 is a representation of an example training data set 300 that may be analyzed and obfuscated by an example data obfuscator 110, which may be implemented by the data obfuscator 110 of FIGS. 1 or 2. The example training data set includes audio data 332 represented by an audio data graph, and text transcript data 334 represented by text ("Zero...One... Two [...]"). The example audio data graph of the audio data 332 shows magnitude (in dB) of speech along a y-axis versus time (in seconds) along an x-axis of the audio graph. In the illustrated example of FIG. 3, the audio data graph represents speech of a user counting from zero to nine. For example, in the audio data 332 of FIG.3, assume the word "zero" is represented in the audio data 332 by speech data 340 and the word "four" is represented by speech data 344.

In examples disclosed herein, the data obfuscator 110 uses the audio data 332 and the transcript data 334 to generate obfuscated training data. Referring to the example audio data graph of the audio data 332, the acoustic feature generator 210 may detect a plurality of acoustic features in the audio data 332. For example, the acoustic feature generator 210 may identify one or a plurality of features in the speech data 340 for the word "zero" or one or a plurality of features in the speech data 344 for the word "four." More specifically, the acoustic feature generator 210 may detect a speech sound corresponding to "z" (i.e., a speech sound that matches a user speaking the beginning of the word "zero") or a speech sound corresponding to "ve" (i.e., a speech sound that matches a user speaking a middle portion of the word "seven"). In some examples, the acoustic feature generator 210 may detect features corresponding to combinations of letters or sounds in the word zero from the speech data 340 or in the word "seven" from the speech data 347, and from all other words detected in the audio data 342.

In a more specific example that may be implemented by the state identifier 220, the state identifier 220 may analyze the speech data 344 of the word "four." In this example, assume that the word "four" is included in a 0.2 second (20 frame) audio feature generated by the audio feature generator 210. After the acoustic feature generator 210 identifies corresponding features in the audio data 332 of FIG. 3, the state identifier 220 creates annotated feature vectors from the context of the text transcript data 334. For example, a label state from the speech data 344 for the beginning of the word "four" may be generated along with the corresponding acoustic feature for the beginning of the word "four." The example state identifier 220 provides the annotated feature vectors to the randomizer 230 to provide an audio analysis system (e.g., the audio analysis system 120) with randomized annotated feature vectors so that the content of the speech or content of the transcript text of the training data 300 cannot be determined.

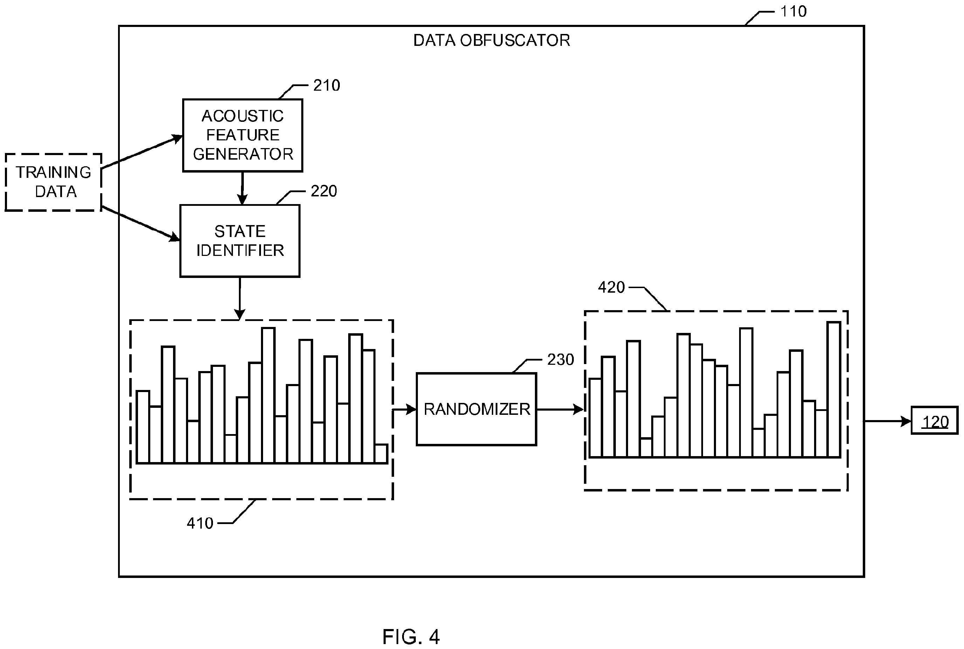

FIG. 4 illustrates a representation of an example obfuscation of training data (e.g., the training data 130, 300) performed by an example randomizer 230 of a data obfuscator 110, which may be implemented by the data obfuscator 110 of FIGS. 1 and 2. In FIG. 4 the randomizer 230 receives a sequence 410 of annotated feature vectors representative of training data analyzed by the acoustic feature generator 210 and the state identifier 220. The randomizer 230 randomizes the order of the sequence 410 of annotated feature vectors to create a randomized sequence of annotated feature vectors 420. As illustrated in the example of FIG. 4, each annotated feature vector of the sequence 410 and the randomized sequence 420 is visually represented by a bar. Accordingly, in the example of FIG. 4, an annotated feature vector of the sequence 410 corresponds to a same annotated feature vector of the randomized sequence 420 having the same size as the annotated feature vector of the sequence 410.

As shown in the example representation of FIG. 4, the annotated feature vectors 410, which each include state information, are randomized into a new sequence 420 such that the original training data cannot be interpreted (because the speech sounds and text transcripts are not in the same original order received by the data obfuscator 110). In the illustrated example of FIG. 4, all annotated feature vectors from the sequence 410 are transmitted in the randomized sequence 420 to the audio analysis system 120. In some examples, the randomizer 230 may vary timing of sending portions or all of the annotated feature vectors of the randomized sequence of feature to the audio analysis system 120.

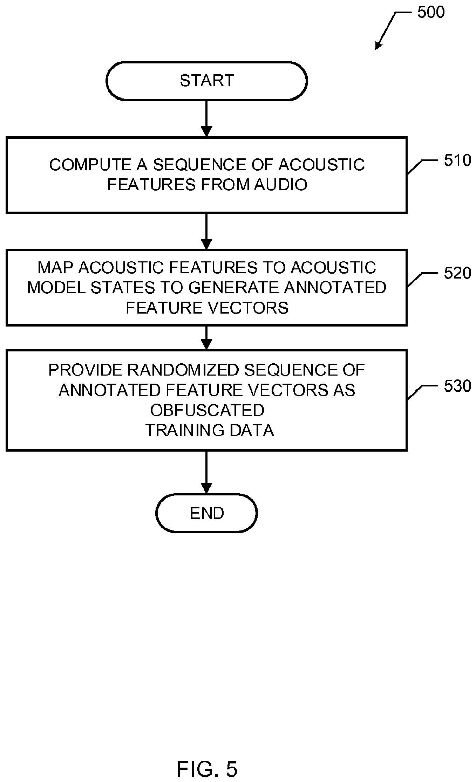

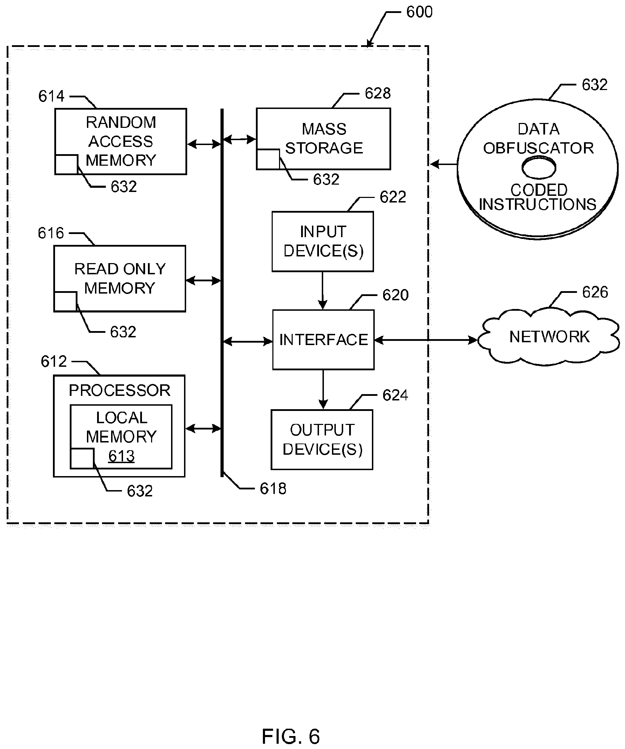

A flowchart representative of example machine readable instructions for implementing the data obfuscator 110 of FIG. 2 is shown in FIG. 5. In this example, the machine readable instructions comprise a program/process for execution by a processor such as the processor 612 shown in the example processor platform 600 discussed below in connection with FIG. 6. The program/process may be embodied in executable instructions (e.g., software) stored on a tangible computer readable storage medium such as a CD-ROM, a floppy disk, a hard drive, a digital versatile disk (DVD), a Blu-ray disk, or a memory associated with the processor 612, but the entire program/process or parts thereof could alternatively be executed by a device other than the processor 612 or embodied in firmware or dedicated hardware. Further, although the example program is described with reference to the flowchart illustrated in FIG. 5, many other methods of implementing the example data obfuscator 110 may alternatively be used. For example, the order of execution of the blocks may be changed, or some of the blocks described may be changed, eliminated, or combined.

The process 500 of FIG. 5 begins with an initiation of the data obfuscator 110 (e.g., upon startup, upon instructions from a user, upon startup of a device implementing the data obfuscator 110 (e.g., a computing device, such as a server, a computer, or a mobile device), etc.). The example process 500 of FIG. 5 may be executed to obfuscate audio analysis training data in accordance with the teachings of this disclosure.

At block 510 of the example process 500 of FIG. 5, the acoustic feature generator 210 computes a sequence of acoustic features from the audio file 132 of the training data 130. For example, the acoustic feature generator 210 may analyze timing and magnitude of speech to determine features corresponding to speech sounds in the audio data. At block 520, the state identifier maps the acoustic features to acoustic model states to generate annotated feature vectors. Accordingly, at block 520, the state identifier 220 determines an appropriate state label (e.g., from a database of states/state labels) for features identified by the acoustic feature generator 210.

In the example process 500, at block 530, the randomizer 230 provides a randomized sequence of annotated feature vectors as obfuscated training data to an audio analysis system. For example, at block 530, the randomizer 230 receives a sequence of annotated feature vectors corresponding to the training data 130 and randomizes and order of the annotated feature vectors to a randomized sequence. In some examples, the randomized sequence of annotated feature vectors is randomized based on order, timing, or selection. For example, some annotated feature vectors may be provided to the audio analysis system 120 while other annotated feature vectors are not. Accordingly, after block 530 of the example process 500, audio data and transcript data of the annotated feature vectors cannot be understood as the original audio file 132 and text transcript 134 of the training data 130. After block 530, the example process 500 of FIG. 5 ends.

As mentioned above, the example processes of FIG. 5 may be implemented using coded instructions (e.g., computer or machine readable instructions) stored on a tangible computer readable storage medium such as a hard disk drive, a flash memory, a read-only memory (ROM), a compact disk (CD), a digital versatile disk (DVD), a cache, a random-access memory (RAM) or any other storage device or storage disk in which information is stored for any duration (e.g., for extended time periods, permanently, for brief instances, for temporarily buffering, or for caching of the information). As used herein, the term tangible computer readable storage medium is expressly defined to include any type of computer readable storage device or storage disk and to exclude propagating signals and to exclude transmission media. As used herein, "tangible computer readable storage medium" and "tangible machine readable storage medium" are used interchangeably. Additionally or alternatively, the example processes of FIG. 5 may be implemented using coded instructions (e.g., computer or machine readable instructions) stored on a non-transitory computer or machine readable medium such as a hard disk drive, a flash memory, a read-only memory, a compact disk, a digital versatile disk, a cache, a random-access memory or any other storage device or storage disk in which information is stored for any duration (e.g., for extended time periods, permanently, for brief instances, for temporarily buffering, or for caching of the information). As used herein, the term non-transitory computer readable medium is expressly defined to include any type of computer readable storage device or storage disk and to exclude propagating signals and to exclude transmission media.

As used herein, when the phrase "at least" is used as the transition term in a preamble of a claim, it is open-ended in the same manner as the term "comprising" is open ended. As used herein the term "a" or "an" may mean "at least one," and therefore, "a" or "an" do not necessarily limit a particular element to a single element when used to describe the element. As used herein, when the term "or" is used in a series, it is not, unless otherwise indicated, considered an "exclusive or."

FIG. 6 is a block diagram of an example processor platform 600 capable of executing the instructions of FIG. 5 to implement the data obfuscator 110 of FIG. 2. The example processor platform 600 may be or may be included in any type of apparatus, such as a server, a personal computer, a mobile device (e.g., a cell phone, a smart phone, a tablet, etc.), a personal digital assistant (PDA), an Internet appliance, a DVD player, a CD player, a digital video recorder, a Blu-ray player, a gaming console, a personal video recorder, a set top box, or any other type of computing device.

The processor platform 600 of the illustrated example of FIG. 6 includes a processor 612. The processor 612 of the illustrated example is hardware. For example, the processor 612 can be implemented by at least one integrated circuit, logic circuit, microprocessor or controller from any desired family or manufacturer.

The processor 612 of the illustrated example includes a local memory 613 (e.g., a cache). The processor 612 of the illustrated example is in communication with a main memory including a volatile memory 614 and a non-volatile memory 616 via a bus 618. The volatile memory 614 may be implemented by Synchronous Dynamic Random Access Memory (SDRAM), Dynamic Random Access Memory (DRAM), RAMBUS Dynamic Random Access Memory (RDRAM) or any other type of random access memory device. The non-volatile memory 616 may be implemented by flash memory or any other desired type of memory device. Access to the main memory 614, 616 is controlled by a memory controller.

The processor platform 600 of the illustrated example also includes an interface circuit 620. The interface circuit 620 may be implemented by any type of interface standard, such as an Ethernet interface, a universal serial bus (USB), or a peripheral component interconnect (PCI) express interface.

In the illustrated example, at least one input device 622 is connected to the interface circuit 620. The input device(s) 622 permit(s) a user to enter data and commands into the processor 612. The input device(s) can be implemented by, for example, an audio sensor, a microphone, a camera (still or video), a keyboard, a button, a mouse, a touchscreen, a track-pad, a trackball, isopoint or a voice recognition system.

At least one output device 624 is also connected to the interface circuit 620 of the illustrated example. The output device(s) 624 can be implemented, for example, by display devices (e.g., a light emitting diode (LED), an organic light emitting diode (OLED), a liquid crystal display, a cathode ray tube display (CRT), a touchscreen, a tactile output device, a light emitting diode (LED), a printer or speakers). The interface circuit 620 of the illustrated example, thus, may include a graphics driver card, a graphics driver chip or a graphics driver processor.

The interface circuit 620 of the illustrated example also includes a communication device such as a transmitter, a receiver, a transceiver, a modem or network interface card to facilitate exchange of data with external machines (e.g., computing devices of any kind) via a network 626 (e.g., an Ethernet connection, a digital subscriber line (DSL), a telephone line, coaxial cable, a cellular telephone system, etc.).

The processor platform 600 of the illustrated example also includes at least one mass storage device 628 for storing executable instructions (e.g., software) or data. Examples of such mass storage device(s) 628 include floppy disk drives, hard drive disks, compact disk drives, Blu-ray disk drives, RAID systems, and digital versatile disk (DVD) drives.

The coded instructions 632 of FIG. 5 may be stored in the mass storage device 628, in the local memory 613 in the volatile memory 614, in the non-volatile memory 616, or on a removable tangible computer readable storage medium such as a CD or DVD.

From the foregoing, it will be appreciated that the above disclosed methods, apparatus and articles of manufacture obfuscate audio analysis training data such that neither audio data nor a corresponding text transcript can be interpreted or understood. In examples disclosed herein, features are identified in audio data and mapped to states of an acoustic model. The acoustic features and states corresponding to context (e.g., words or parts of words determined from text from the transcript) of the acoustic features are provided in an annotated feature vector sequence to a randomizer. The example randomizer randomizes the annotated feature vectors such that the annotated feature vectors are provided to an audio analysis system (e.g., a speech recognition system, a language identification system, an audio classification system, etc.) in a random manner. Thus examples disclosed herein allow for an audio analysis system to use the annotated feature vectors created from training data (e.g., audio data and a corresponding text transcript including confidential information) to increase accuracy of its acoustic model without being able to interpret or understand content or subject matter of the training data.

Although certain example methods, apparatus and articles of manufacture have been disclosed herein, the coverage of this disclosure is not limited thereto. The scope of protection is defined by the appended claims.

## Claims

1. A method to obfuscate training data, the method comprising:
computing a sequence of acoustic features from audio data of the training data, the training data comprising the audio data and a corresponding text transcript;
mapping the acoustic features to acoustic model states to generate annotated feature vectors, the annotated feature vectors comprising the acoustic features and corresponding states, the states corresponding to context from the text transcript; and
providing a randomized sequence of the annotated feature vectors as obfuscated training data to an audio analysis system.

2. The method as defined in claim 1, the training data comprising confidential information between an entity and a customer of the entity.

3. The method as defined in claim 1, further comprising
creating a sequence of the annotated feature vectors corresponding to the sequence of acoustic features; and
randomizing the sequence of the annotated feature vectors to generate the randomized sequence of the annotated feature vectors.

4. The method as defined in claim 3, wherein randomizing the sequence of annotated feature vectors comprises reorganizing the sequence of annotated feature vectors to generate the randomized sequence of annotated feature vectors.

5. The method as defined in claim 3, wherein randomizing the sequence of annotated feature vectors comprises randomizing a timing of sending each annotated feature vector of the randomized sequence of the annotated feature vectors.

6. The method as defined in claim 3, wherein the randomized sequence of annotated feature vectors does not include confidential information included in the training data.

7. The method as defined in claim 1, wherein the audio analysis system is a speech recognition system, the speech recognition system to use the annotated feature vectors in an acoustic model of the speech recognition system.

8. An apparatus comprising:
an acoustic feature generator adapted to compute acoustic features from an audio file of training data;
a state identifier adapted to:
identify states of the acoustic features, the states being associated with an acoustic model of an audio analysis system and determined from context of a text transcript of the training data corresponding to the audio file, and
generate annotated feature vectors including the acoustic features and the states of the acoustic features; and
a randomizer adapted to randomize the annotated feature vectors such that subject matter of the training data is obfuscated.

9. The apparatus as defined in claim 8, wherein the state identifier is adapted to identify the states from phonemes of each frame of the acoustic features.

10. The apparatus as defined in claim 8, wherein the randomizer is further adapted to provide the randomized acoustic features to the audio analysis system.

11. The apparatus as defined in claim 10, wherein the audio analysis system is adapted to use the randomized annotated feature vectors in an acoustic model of the audio analysis system to convert speech to text.

12. The apparatus as defined in claim 8, wherein the training data comprises confidential information.

13. A non-transitory computer readable storage medium comprising instructions that, when executed, cause a machine to:
analyze audio data to determine acoustic features from the audio data;
map the acoustic features to states of an acoustic model of an audio analysis system and generate annotated feature vectors comprising the states and corresponding context from text transcripts of the audio data; and
provide randomized annotated feature vectors to the audio analysis system to obfuscate confidential information in the audio data and the text transcript, the randomized annotated feature vectors from the set of generated annotated feature vectors.

14. The non-transitory computer readable storage medium as defined in claim 13, wherein the randomized annotated feature vectors are randomized by reorganizing a sequence of the annotated feature vectors that corresponds to a sequence of the audio data and text transcript.

15. The non-transitory computer readable storage medium as defined in claim 13, wherein the audio analysis system is to use the randomized acoustic features in an acoustic model to convert speech to text without being able to determine content of the audio data or corresponding content of the text transcripts.

## Patentansprüche

1. Verfahren zum Verschleiern von Übungsdaten, wobei das Verfahren umfasst:
Berechnen einer Abfolge akustischer Merkmale aus Audiodaten der Übungsdaten, wobei die Übungsdaten die Audiodaten und eine entsprechende Texttranskription umfassen;
Abbilden der akustischen Merkmale auf akustische Modellzustände, um mit Anmerkungen versehene Merkmalsvektoren zu erzeugen, wobei die mit Anmerkungen versehenen Merkmalsvektoren die akustischen Merkmale und entsprechende Zustände umfassen, wobei die Zustände Kontext aus der Texttranskription entsprechen; und
Bereitstellen einer randomisierten Abfolge der mit Anmerkungen versehenen Merkmalsvektoren als verschleierte Übungsdaten an einem Audioanalysesystem.

2. Verfahren nach Anspruch 1, wobei die Übungsdaten Informationen umfassen, die zwischen einem Rechtssubjekt und einem Kunden des Rechtssubjekts vertraulich sind.

3. Verfahren nach Anspruch 1, ferner umfassend:
Erzeugen einer Abfolge mit Anmerkungen versehener Merkmalsvektoren, die der Abfolge akustischer Merkmale entsprechen; und
Randomisieren der Abfolge der mit Anmerkungen versehenen Merkmalsvektoren, um die randomisierte Abfolge der mit Anmerkungen versehenen Merkmalsvektoren zu erzeugen.

4. Verfahren nach Anspruch 3, wobei das Randomisieren der Abfolge mit Anmerkungen versehener Merkmalsvektoren das Umstellen der Abfolge mit Anmerkungen versehener Merkmalsvektoren umfasst, um die randomisierte Abfolge mit Anmerkungen versehener Merkmalsvektoren zu erzeugen.

5. Verfahren nach Anspruch 3, wobei das Randomisieren der Abfolge mit Anmerkungen versehener Merkmalsvektoren das Randomisieren von Sendezeiten der einzelnen mit Anmerkungen versehenen Merkmalsvektoren der randomisierten Abfolge der mit Anmerkungen versehenen Merkmalsvektoren umfasst.

6. Verfahren nach Anspruch 3, wobei die randomisierte Abfolge mit Anmerkungen versehener Merkmalsvektoren keine vertraulichen Informationen enthält, die in den Übungsdaten enthalten sind.

7. Verfahren nach Anspruch 1, wobei das Audioanalysesystem ein Spracherkennungssystem ist, wobei das Spracherkennungssystem die mit Anmerkungen versehenen Merkmalsvektoren in einem akustischen Modell des Spracherkennungssystem verwenden soll.

8. Vorrichtung, umfassend:
einen Akustikmerkmalsgenerator, der dafür ausgelegt ist, akustische Merkmale aus einer Audiodatei aus Übungsdaten zu erzeugen;
einen Zustandsidentifizierer, der für Folgendes ausgelegt ist:
Identifizieren von Zuständen der akustischen Merkmale, wobei die Zustände mit einem akustischen Modell eines Audioanalysesystems assoziiert sind und aus Kontext einer Texttranskription der Übungsdaten, die der Audiodatei entsprechen, bestimmt werden, und
Erzeugen mit Anmerkungen versehener Merkmalsvektoren einschließlich der akustischen Merkmale und der Zustände der akustischen Merkmale, und
einen Zufallsgenerator, der ausgelegt ist zum Randomisieren der mit Anmerkungen versehenen Merkmalsvektoren, so dass Inhalte der Übungsdaten verschleiert werden.

9. Vorrichtung nach Anspruch 8, wobei der Zustandsidentifizierer dafür ausgelegt ist, die Zustände aufgrund von Phonemen jedes Frame der akustischen Merkmale zu identifizieren.

10. Vorrichtung nach Anspruch 8, wobei der Zufallsgenerator ferner dafür ausgelegt ist, die randomisierten akustischen Merkmale am Audioanalysesystem bereitzustellen.

11. Vorrichtung nach Anspruch 10, wobei das Audioanalysesystem dafür ausgelegt ist, die randomisierten mit Anmerkungen versehenen Merkmalsvektoren in einem akustischen Modell des Audioanalysesystems zu verwenden, um Sprache in Text umzuwandeln.

12. Vorrichtung nach Anspruch 8, wobei die Übungsdaten vertrauliche Informationen umfassen.

13. Nichtflüchtiges, computerlesbares Speichermedium, Befehle umfassend, die bei ihrer Ausführung eine Maschine zu Folgendem veranlassen:
Analysieren von Audiodaten, um akustische Merkmale aufgrund der Audiodaten zu bestimmen;
Abbilden der akustischen Merkmale auf Zustände eines akustischen Modells eines Audioanalysesystems und Erzeugen mit Anmerkungen versehener Merkmalsvektoren, welche die Zustände und entsprechenden Kontext aus Texttranskriptionen der Audiodaten umfassen; und
Bereitstellen randomisierter mit Anmerkungen versehener Merkmalsvektoren am Audioanalysesystem, um vertrauliche Informationen in den Audiodaten und der Texttranskription zu verschleiern, wobei die randomisierten mit Anmerkungen versehenen Merkmalsvektoren aus dem Satz erzeugter mit Anmerkungen versehener Merkmalsvektoren.

14. Nichtflüchtiges, computerlesbares Speichermedium nach Anspruch 13, wobei die randomisierten mit Anmerkungen versehenen Merkmalsvektoren durch Umstellen einer Abfolge der mit Anmerkungen versehenen Merkmalsvektoren, die einer Abfolge der Audiodaten und der Texttranskription entspricht, randomisiert werden.

15. Nichtflüchtiges, computerlesbares Speichermedium nach Anspruch 13, wobei das Audioanalysesystem die randomisierten akustischen Merkmale in einem akustischen Modell verwenden soll, um Sprache in Text umzuwandeln, ohne in der Lage zu sein, Inhalt der Audiodaten oder einen entsprechenden Inhalt der Texttranskriptionen zu bestimmen.

## Revendications

1. Procédé pour brouiller des données d'apprentissage, le procédé comprenant les étapes consistant à :
calculer une suite de caractéristiques acoustiques à partir de données audio des données d'apprentissage, les données d'apprentissage comprenant les données d'audio et une transcription correspondante en texte ;
associer les caractéristiques acoustiques à des états de modèle acoustique pour générer des vecteurs caractéristiques annotés, les vecteurs caractéristiques annotés comprenant les caractéristiques acoustiques et des états correspondants, les états correspondant à un contexte issu de la transcription en texte ; et
fournir une suite ordonnée aléatoirement des vecteurs caractéristiques annotés en tant que données d'apprentissage brouillées à un système d'analyse audio.

2. Procédé selon la revendication 1, les données d'entraînement comprenant des informations confidentielles entre une entité et un client de l'entité.

3. Procédé selon la revendication 1, comprenant en outre les étapes consistant à
créer une suite de vecteurs caractéristiques annotés correspondant à la suite de caractéristiques acoustiques ; et
ordonner aléatoirement la suite de vecteurs caractéristiques annotés pour générer la suite ordonnée aléatoirement des vecteurs caractéristiques annotés.

4. Procédé selon la revendication 3, dans lequel l'étape consistant à ordonner aléatoirement la suite de vecteurs caractéristiques annotés comprend la réorganisation de la suite de vecteurs caractéristiques annotés pour générer la suite ordonnée aléatoirement de vecteurs caractéristiques annotés.

5. Procédé selon la revendication 3, dans lequel l'étape consistant à ordonner aléatoirement la suite de vecteurs caractéristiques annotés comprend le rangement aléatoire d'une heure d'envoi de chaque vecteur caractéristique annoté de la suite ordonnée aléatoirement de vecteurs caractéristiques annotés.

6. Procédé selon la revendication 3, dans lequel la suite ordonnée aléatoirement de vecteurs caractéristiques annotés ne comprend pas d'informations confidentielles incluses dans les données d'apprentissage.

7. Procédé selon la revendication 1, dans lequel le système d'analyse audio est un système de reconnaissance vocale, le système de reconnaissance vocale devant utiliser les vecteurs caractéristiques annotés dans un modèle acoustique du système de reconnaissance vocale.

8. Appareil comprenant :
un générateur de caractéristiques acoustiques conçu pour calculer des caractéristiques acoustiques à partir d'un fichier audio de données d'apprentissage ;
un identificateur d'états conçu pour :
identifier des états des caractéristiques acoustiques, les états étant associés à un modèle acoustique d'un système d'analyse audio et déterminés à partir du contexte d'une transcription en texte des données d'apprentissage correspondant au fichier audio, et
générer des vecteurs caractéristiques annotés incluant les caractéristiques acoustiques et les états des caractéristiques acoustiques ; et
un générateur d'ordre aléatoire conçu pour ordonner aléatoirement les vecteurs caractéristiques annotés de telle sorte que l'objet des données d'apprentissage soit brouillé.

9. Appareil selon la revendication 8, dans lequel l'identificateur d'état est conçu pour identifier les états à partir de phonèmes de chaque cadre des caractéristiques acoustiques.

10. Appareil selon la revendication 8, dans lequel le générateur d'ordre aléatoire est conçu en outre pour fournir les caractéristiques acoustiques ordonnées aléatoirement au système d'analyse audio.

11. Appareil selon la revendication 10, dans lequel le système d'analyse audio est conçu pour utiliser les vecteurs caractéristiques annotés ordonnés aléatoirement dans un modèle acoustique du système d'analyse audio pour convertir la voix en texte.

12. Appareil selon la revendication 8, dans lequel les données d'apprentissage comprennent des informations confidentielles.

13. Support de stockage non transitoire lisible par ordinateur comprenant des instructions, qui, lorsqu'elles sont exécutées, amènent une machine à :
analyser des données audio pour déterminer des caractéristiques acoustiques à partir de données audio ;
associer les caractéristiques acoustiques à des états de modèle acoustique d'un système d'analyse audio et générer des vecteurs caractéristiques annotés comprenant les états et le contexte correspondant issu des transcriptions en texte des données audio ; et
fournir des vecteurs caractéristiques annotés ordonnés aléatoirement au système d'analyse audio pour brouiller des informations confidentielles dans les données et la transcription en texte, les vecteurs caractéristiques annotés ordonnés aléatoirement issus de l'ensemble de vecteurs caractéristiques annotés générés.

14. Support de stockage non transitoire lisible par ordinateur selon la revendication 13, dans lequel les vecteurs caractéristiques annotés ordonnés aléatoirement sont ordonnés aléatoirement en réorganisant une suite de vecteurs caractéristiques annotés qui correspond à une suite des données audio et de la transcription en texte.

15. Support de stockage non transitoire lisible par ordinateur selon la revendication 13, dans lequel le système d'analyse audio doit utiliser les caractéristiques acoustiques ordonnées aléatoirement dans un modèle acoustique pour convertir la voix en texte sans être en mesure de déterminer le contenu des données audio ou du contenu correspondant des transcriptions en texte.
